# EUROPEAN PATENT APPLICATION

(11) **EP 4 640 303 A1**
(43) Date of publication of application: **29.10.2025**
(21) Application number: 25172041.3
(22) Date of filing: 23.04.2025
(51) Int. Cl.: B01D 53/94, B01J 23/40, B01J 35/57, B01J 37/00, B01J 37/02, B01J 37/14, F01N 3/035, F01N 3/10

(54) **CATALYTIC GASOLINE PARTICULATE FILTER**

(30) Priority: 25.04.2024 US 202463638483 P
(71) Applicant: Johnson Matthey Public Limited Company, London EC2V 7AD (GB)
(72) Inventor: ARULRAJ, Kaneshalingam, Royston, SG8 5HE (GB); BENET RAJKUMAR, Brenda, Royston, SG8 5HE (GB); WARREN, Sarah, Royston, SG8 5HE (GB)
(74) Representative: Boult Wade Tennant LLP

(57) **Abstract**

A washcoat slurry comprising a platinum group metal (PGM), an oxygen storage capacity (OSC) material, an inorganic oxide support, a polyacrylate, and a solvent is disclosed. A method for the manufacture of a catalytic gasoline particulate filter for the treatment of an exhaust gas comprising coating a wall-flow filter substrate with the washcoat slurry is disclosed.

## Description

### FIELD OF THE INVENTION

The present invention relates to a method of providing a catalytic wall-flow filter suitable for use in an emission treatment system, in particular an emission treatment system for a positive ignition internal combustion engine, such as a gasoline spark ignition engine. The present invention provides a method for manufacturing a gasoline particulate filter with improved filtration efficiency and/or reduced back pressure.

### BACKGROUND OF THE INVENTION

Gasoline particulate filters (GPF) are an emission after-treatment technology developed to control particulate emissions from gasoline direct injection (GDI) engines.

Most early GPF applications included an uncoated GPF positioned downstream of a three-way catalyst (TWC). As the technology matured, GPFs have been coated with a three-way catalyst. See, for example, US2009/0193796A1, US2010/0239478A1, US2019/0009254A1, US 2019/0168162A1, and US 2020/0353410A1. However, the combination of the TWC washcoat on a filter body does introduce additional issues such as undue back-pressure, and there are requirements for minimum CO, NOx and HC conversion properties. In addition, there are cost considerations with a need to provide the best possible balance of performance to cost.

There is a continued need for improving technologies to effectively convert CO, NOx and HC and to reduce particulate matters in exhaust gas from a gasoline engine.

It is an object of the present invention to provide a catalytic GPF having improved filtration efficiency for particulate matters and/or improved TWC activity for exhaust gas.

### SUMMARY OF THE INVENTION

One aspect of the present disclosure is directed to a washcoat slurry, comprising: a) a platinum group metal selected from the group consisting of Pt, Pd, Rh and mixtures thereof; b) an oxygen storage capacity (OSC) material; c) an inorganic oxide support; d) a polyacrylate; and e) a solvent.

Another aspect of the present disclosure is directed to a method for the manufacture of a catalytic gasoline particulate filter (GPF) for the treatment of an exhaust gas, the method comprising:
(i) forming a washcoat slurry comprising: a) a platinum group metal selected from the group consisting of Pt, Pd, Rh and mixtures thereof; b) an oxygen storage capacity (OSC) material; c) an inorganic oxide support; d) a polyacrylate; and e) a solvent;
(ii) coating a wall-flow filter substrate with the washcoat slurry to form a washcoated substrate; and
(iii) calcining the washcoated substrate to form a gasoline particulate filter.

Another aspect of the present disclosure is a catalytic gasoline particulate filter (GPF) produced by the method as disclosed herein.

Another aspect of the present disclosure is an emission treatment system for treating a flow of a combustion exhaust gas from gasoline direct injection engines, the system comprising the catalytic GPF as disclosed herein. The exhaust system can comprise additional components, such as a TWC catalyst containing a TWC composition applied to a honeycomb flow-through substrate and disposed either upstream or downstream of the catalytic GPF according to the invention.

### DETAILED DESCRIPTION OF THE INVENTION

The present disclosure will now be described further. In the following passages, different aspects/embodiments of the disclosure are defined in more detail. Each aspect/embodiment so defined may be combined with any other aspect/embodiment or aspects/embodiments unless clearly indicated to the contrary. In particular, any feature indicated as being preferred or advantageous may be combined with any other feature or features indicated as being preferred or advantageous.

One aspect of the present disclosure is directed to a washcoat slurry comprising, comprising: a) a platinum group metal selected from the group consisting of Pt, Pd, Rh and mixtures thereof; b) an oxygen storage capacity (OSC) material; c) an inorganic oxide support; d) a polyacrylate; and e) a solvent.

The washcoat slurry comprises a PGM selected from the group consisting of Pt, Pd, Rh, and mixtures thereof. In some embodiments, the washcoat slurry comprises Pd and Rh. In some embodiments, the washcoat slurry comprises Pt and Rh. The amount of the total PGM in the washcoat slurry can be from 0.005 to 10 wt%, from 0.001 to 5 wt%, or from 0.05 to 3.0 wt%, relative to the total weight of the washcoat slurry.

The washcoat slurry comprises an oxygen storage capacity (OSC) material. "Oxygen storage capacity" refers to the ability of materials used as oxygen storage capacity material in catalysts to store oxygen at lean conditions and to release it at rich conditions.

The OSC material can be ceria, a mixed oxide comprising ceria, or a composite oxide comprising ceria. In some embodiments, the OSC material comprises a mixed oxide of cerium and zirconium; a mixed oxide of cerium, zirconium, and aluminium; a mixed oxide of cerium, zirconium, and neodymium; or a mixed oxide of cerium, zirconium and praseodymium. The term "mixed oxide" as used herein generally refers to a mixture of oxides in a single phase, as is conventionally known in the art.

In some embodiments, the OSC material comprises a cerium-zirconium mixed oxide nano sol with a Dv50 of less than 1 µm.

In some embodiments, the OSC material comprises a cerium-zirconium mixed oxide with a Dv50 of from 1 to 20 µm, from 2 to 15 µm, or from 5 to 10 µm. The OSC material may have a Dv90 in a range of from 2 to 40 µm, from 3 to 35 µm, or from 5 to 30 µm.

Particle size distributions of solid particles can be characterized by the Dv10, Dv50 and Dv90 measurements. In each case the number indicates the percentage amount of particles smaller than the recited value. In other words, a Dv90 of 1 µm means that 90% of the particles are smaller than 1 µm in diameter. By knowing a Dv10 and a Dv90, the range of particles in a distribution of particles can be defined. The characterization of the particle size of a sample by its Dv10 and Dv90 values generally defines the breadth of the particle-size distribution. The closer these values are, the narrower the distribution of particle sizes.

The particle size measurements necessary to obtain Dv10, Dv50 and Dv90 values of solid particles such as the OSC material or the inorganic oxide support, can be obtained by Laser Diffraction Particle Size Analysis using a Malvern Mastersizer 3000, which applies a mathematical Mie theory model to determine a particle size distribution. The laser diffraction system works by determining diameters for the particles based on a spherical approximation. For the particle size measurements by Laser Diffraction Particle Size Analysis, diluted samples were prepared by sonication in distilled water without surfactant for 30 seconds at 35 watts.

The washcoat slurry comprises an inorganic oxide support. The inorganic oxide support can be an oxide of Groups 2, 3, 4, 5, 13 and 14 elements. The inorganic oxide support is preferably a refractory oxide that exhibits chemical and physical stability at high temperatures, such as the temperatures associated with gasoline engine exhaust. The inorganic oxide support can be selected from the group consisting of alumina, silica, titania, and mixed oxides or composite oxides thereof. In some embodiments, the inorganic oxide support is an alumina

The inorganic oxide support can be doped with a dopant. The dopant can be selected from the group consisting of La, Sr, Si, Ba, Y, Pr, Nd, Ce, and mixtures thereof. For example, the dopant can be La. The dopant content in the inorganic oxide support can be from 1 to 30 wt%, from 2 to 25 wt%, or from 3 to 20 wt%.

The amount of the inorganic oxide support in the washcoat slurry can be from 2 to 30 wt% or from 5 to 20 wt% relative to the total weight of the washcoat slurry.

The inorganic oxide support may have a Dv90 of from 5 to 100 µm, from 10 to 90 µm, or from 15 to 80 µm.

The inorganic oxide support may have a Dv50 of from 0.1 to 20 µm, from 0.5 to 10 µm, or from 1 to 5 µm.

The OSC material and the inorganic oxide support in the washcoat slurry can have a weight ratio of from 10:1 to 1:10, from 5:1 to 1:5, or from 3:1 to 1:3.

The washcoat slurry comprises a solvent. Water and organic solvents (methanol, ethanol, propanol, and the like) or their mixtures can be used. Water is a commonly used solvent.

The washcoat slurry comprises a polyacrylate. The term "polyacrylate" refers any polymer containing polymerized acrylic acid and/or its deprotonated form, depending on the pH of the media it is present in. The polyacrylate can be a homopolymer or a copolymer. In some embodiments, the polyacrylate is a homopolymer of acrylic acid or acrylate (i.e., the deprotonated form of acrylic acid). In some embodiments, the polyacrylate is a copolymer.

In a water solution at neutral pH, the polyacrylate is an anionic polymer, i.e., many of the carboxylic side chains of the polymer lose their protons and acquire a negative charge. Partially or wholly deprotonated polyacrylates are polyelectrolytes, with the ability to absorb and retain water.

The washcoat slurry may comprise the polyacrylate in an amount of from 5 to 40% wt%, from 8 to 35 wt%, or from 10 to 30 wt% relative to the non-combustible solids in the washcoat slurry. The amount of the non-combustible solids in the washcoat slurry can be determined by drying a given weight of the washcoat slurry, and then calcining it at 500°C in air for 2 h.

Another aspect of the present disclosure is directed to a method for the manufacture of a catalytic GPF for the treatment of an exhaust gas, the method comprising:
(i) forming a washcoat slurry comprising: a) a platinum group metal selected from the group consisting of Pt, Pd, Rh and mixtures thereof; b) an oxygen storage capacity (OSC) material; c) an inorganic oxide support; d) a polyacrylate; and e) a solvent;
(ii) coating a wall-flow filter substrate with the washcoat slurry to form a washcoated substrate; and
(iii) calcining the washcoated substrate to form a gasoline particulate filter.

The washcoat slurry is generally prepared by mixing one or more PGM compounds (e.g., palladium nitrate, platinum nitrate, rhodium nitrate, or other salts of PGM), the oxygen storage capacity (OSC) material, the inorganic oxide support, a polyacrylate source, and a solvent (e.g., water).

The polyacrylate source is any material comprising a polyacrylate. Suitable polyacrylate sources includes polyacrylate homopolymers or copolymers containing the polymeric portion and ammonium cation or alkylammonium cations.

In some embodiments, the polyacrylate source is an ammonium polyacrylate, as shown in the formula below.

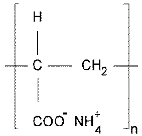

The molecular weight Mw of the ammonium polyacrylate can be from 1000 to 5000, from 2000 to 4000, or from 3200 to 3800 g/mol.

The polyacrylate source can be an aqueous solution of ammonium polyacrylate with a concentration of 10 to 50 wt%. The aqueous solution of ammonium polyacrylate may have a pH of from 7 to 10, or from 8 to 9.5.

The method comprises coating a wall-flow filter substrate with the washcoat slurry to form a washcoated substrate.

The wall-flow filter substrate can be a ceramic, e.g., silicon carbide, cordierite, aluminium nitride, silicon nitride, aluminium titanate, alumina, mullite, pollucite, or composites comprising segments of any two or more thereof. Cordierite, a magnesium aluminosilicate, and silicon carbide are particularly preferred.

The wall-flow filter substrate suitable for use in the present invention typically has a mean pore size of from 8 to 45 µm, for example 8 to 25 µm, or 10 to 20 µm. Pore size is well known in the art and appropriate measurement techniques are known to a person skilled in the art. The wall-flow filter substrate may have a porosity of 40 to 75%, such as 45 to 70%. The mean pore size may be determined using mercury porosimetry and x-ray tomography according to conventional methods.

The techniques for coating a wall-flow filter substrate with the washcoat slurry to form a washcoated substrate is known in the art. One suitable coating procedure is described in WO1999047260. A washcoat slurry can be coated to the wall-flow filter substrate from the inlet face, from the outlet face, or from both the inlet face and the outlet face.

It may be preferable to dry and/or calcine the wall-flow filter substrate containing one coating before another coating is applied. Calcining may be preceded by a drying step at a lower temperature (such as 100 to 200°C). Calcining is routine in the art and may be performed under usual conditions.

Another aspect of the present disclosure is a catalytic gasoline particulate filter (GPF) produced by the method as disclosed herein.

Another aspect of the present disclosure is an emission treatment system for treating a flow of a combustion exhaust gas from gasoline direct injection engines, the system comprising the catalytic GPF as disclosed herein. The exhaust system can comprise additional components, such as a TWC catalyst containing a TWC composition applied to a honeycomb flow-through substrate and disposed either upstream or downstream of the catalytic GPF according to the invention.

## Claims

1. A washcoat slurry, comprising: a) a platinum group metal selected from the group consisting of Pt, Pd, Rh and mixtures thereof; b) an oxygen storage capacity (OSC) material; c) an inorganic oxide support; d) a polyacrylate; and e) a solvent.

2. The washcoat slurry of claim 1, wherein the polyacrylate is a homopolymer of acrylic acid or acrylate.

3. The washcoat slurry of claim 1, wherein the polyacrylate is a copolymer of acrylic acid or acrylate.

4. The washcoat slurry of claim 1, wherein the polyacrylate has a Mw of 3200 to 3800 g/mol.

5. A method for the manufacture of a gasoline particulate filter (GPF) for the treatment of an exhaust gas, the method comprising:
(i) forming a washcoat slurry comprising: a) a platinum group metal selected from the group consisting of Pt, Pd, Rh and mixtures thereof; b) an oxygen storage capacity (OSC) material; c) an inorganic oxide support; d) a polyacrylate; and e) a solvent;
(ii) coating a wall-flow filter substrate with the washcoat slurry to form a washcoated substrate; and
(iii) calcining the washcoated substrate to form a gasoline particulate filter.

6. The method of claim 5, wherein the polyacrylate is a homopolymer of acrylic acid or acrylate.

7. The method of claim 5, wherein the polyacrylate is a copolymer of acrylic acid or acrylate.

8. The method of claim 5, wherein the washcoat slurry was prepared with a polyacrylate source.

9. The method of claim 8, wherein the polyacrylate source is ammonium polyacrylate.

10. The method of claim 8, wherein the polyacrylate source is an aqueous ammonium polyacrylate solution.

11. The method of claim 11, wherein the ammonium polyacrylate has a Mw of 3200 to 3800 g/mole.

12. A catalytic gasoline particulate filter (GPF) for exhaust gas from a gasoline engine, the catalytic GPF is produced by the method of claim 5.

13. An emission treatment system for treating a flow of a combustion exhaust gas from gasoline direct injection engines, the system comprising the gasoline particulate filter (GPF) of claim 12.
